# EUROPEAN PATENT APPLICATION

(11) **EP 3 608 858 A1**
(43) Date of publication of application: **12.02.2020**
(21) Application number: 18020375.4
(22) Date of filing: 10.08.2018
(51) Int. Cl.: G06Q 20/02, G06Q 20/06

(54) **DECENTRALIZED REVERSIBLE MONEY TRANSFER METHOD**

(71) Applicant: Tuturas Haiduc, Vasile Cosmin, 440103 Satu Mare (RO)
(72) Inventor: Tuturas Haiduc, Vasile Cosmin, 440103 Satu Mare (RO)
(74) Representative: Stanciu, Adelina

(57) **Abstract**

The invention presents a decentralized reversible money transfer method for the persons that do not have a bank account. The method, according to the invention consists of the following steps: in a first stage an application is installed on the mobile phone of the sender, then an automatic registration of the user as sender is made in the crypto-currency exchange, then the identity cards of the sender and beneficiary are scanned, then the sender who has a virtual coin sends one virtual coin or a fraction of a virtual coin to the beneficiary, then the virtual coin is converted in a real coin using a protocol with the same crypto-currency exchange, meanwhile the money instantaneously arrive in the account of "delivery point" which has an account in the same bank as the crypto-currency exchange, then the "delivery point" verifies and updates the information regarding the beneficiary and the sender is informed through a message that the beneficiary has been contacted and if the identification data of the beneficiary do not correspond to those registered in the application, he can stop the transfer or correct the occurred errors after which the money are delivered by the "delivery point" selected by the application preinstalled on the mobile phone of the sender for a commission, in the same time the application serves its purpose as a "proof of delivery" - POD - based on which the person in the "delivery point" gets the commission and if the beneficiary cannot be found, the money return in the crypto-currency exchange which converts them into a virtual coin and returns them to the sender.

## Description

The invention presents a decentralized reversible money transfer method especially for the persons that do not have a bank account.

It is estimated that there are a lot of persons all over the world that are considered to be non-banking, which means that these persons do not have bank accounts or they are not used with the banking financial payment devices.

It is also known that most of these persons send cash money through occasional deliverers risking that the money to be lost or not arriving at the destination.

It is rather difficult and risky to send money to different locations because the method is not controllable and it is not as safe as a banking transfer should be.

In the banking transactions field, which are non-cash, it is known the patent document No. AU 2014101277 A1**,** that presents an exclusive banking method for financial loans that uses a virtual coin known as cryto-currency. The major disadvantage of this invention is that it is not working with cash and this makes it limited only to operations made by banks, financial institutions and monetary funds. Therefore, even it uses a cryptocurrency, the method is not accessible to private persons for cash non-banking operations.

There are known several classic money transfer methods, for private persons such as: Western Union, MoneyGram etc.

Their disadvantage is that they request the interested person to move to a post office, to fill in some forms, to pay very big commissions, which means lost time, expenses, human effort and, most of all, the fact that the person depends on an office located in a certain place. Therefore, the existent solutions are not accessible to any person no matter its location.

Also, during the last years, more and more transactions are made using virtual coins. It is well known that these transactions are not reversible which means that once the virtual coin is sent to the beneficiary, the money cannot be returned if there has been an error in the identification data of the beneficiary or regarding the sum itself. Once the payment is ordered it cannot be stopped and errors cannot be corrected. This is the disadvantage of these kinds of transections based on virtual coins.

The technical problem to be solved by the invention is to develop a reversible method for money transfer accessible to the persons who do not have bank accounts through the mobile phone.

The decentralized reversible money transfer method to a predefined destination that do not have a bank account, according to the invention, solves the technical problem by the fact that in a first stage, an application is installed on the mobile phone of the sender, then the automatic registration of the sender is made on the crypto-currency exchange, followed by the stage in which the identity documents of the sender and receiver are scanned in the same application, then the sender that owns a virtual coin sends a coin or a fraction of a coin to the receiver, then the virtual coin is converted in a real coin using a protocol signed with an exchange of virtual currency or its own exchange, meanwhile the converted amount instantaneously arrives in the "delivery point" account that checks and updates the information on the receiver of the money and then delivers the money to him in any currency, for a commission. The "delivery points" are private persons preliminary registered in the same application installed on the mobile phone of the sender. When the money are delivered to the beneficiary, the application serves its purpose as a "proof of delivery" - POD - based on which the person in the "delivery point" gets the commission; the commission is bigger if the time of delivery is shorter.

The decentralized reversible money transfer method, according to the invention, has the following advantages:
- The money transfer is fast, accessible and convenient;
- It minimizes the time of the transfer;
- Offers a maximum of comfort to the user.
- The receiving of the money through the application installed on the mobile phone eliminates the compulsoriness of the beneficiary to move to a certain office in acertain location and, though, reduces the time of the transfer.
- The transfer operation is controllable and can be interupted for the correction of different possible errors occured during the transfer method.

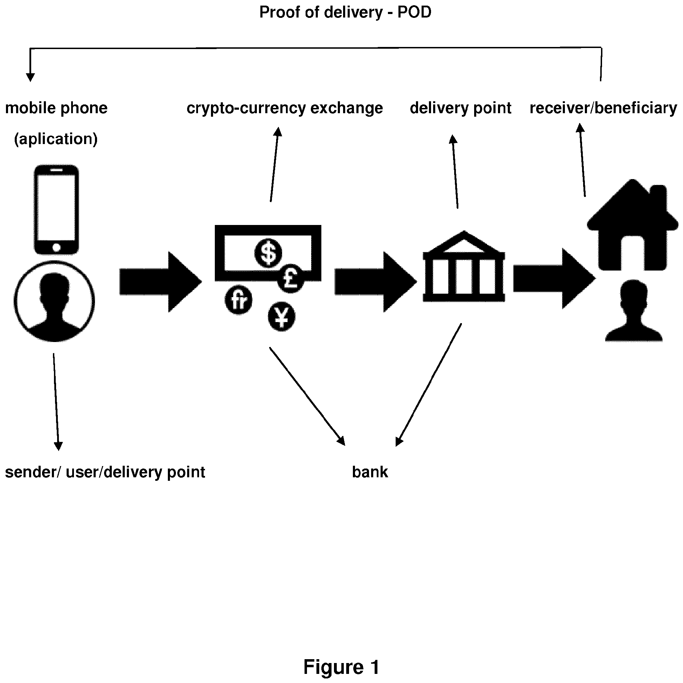

Further on, a practical example of the invention is presented connected with the figure that represents a scheme of the money transfer method.

The decentralized reversible money transfer method for the persons who do not have bank accounts, according to the invention goes on like this: in a first stage, an application is installed on the mobile phone of the sender, then the automatic registration of the user as sender is made on a virtual coin platform. In the next stage, when a money transfer is intended to be made to a beneficiary who does not have a bank account, the sender's and the beneficiary's identity cards are scanned.

The identification can also be made by introducing the data in the application.

Then the sender who owns virtual coin orders the payment of a virtual coin or a fraction of a virtual coin to the predefined beneficiary.

In this stage, the virtual coin/ crypto-currency already listed on the market with an inner value, the exchange for crypto-currency converts it into a real coin, any desired. This amount of money instantly arrives in the account of a "delivery point" that has the account in the same bank as the crypto-currency exchange, as shown in the picture.

The exchange for crypto-currency exchanges the money into FIAT money or any other currency such as USD, EUR or the local currency of the state at the rate of the day.

In the same time, the information regarding the beneficiary arrives at the "delivery point" selected by the application to be the nearest to the beneficiary of the money and the "delivery point" automatically updates the information by comparison with the information in its own data base. This is the moment in which possible occurred errors regarding the beneficiary or the sum can be fixed. In fact, the sender is informed through a message that the beneficiary has been contacted and if the identification data do not match those already installed in the application he can stop the delivery of the money or correct the errors. In case the beneficiary cannot be found the money return on the exchange, than they are converted into a virtual coin and returned to the sender.

In the last phase, the person in the "delivery point" delivers the real money in cash to the predefined beneficiary in any real coin.

So, the sum can be recovered by the sender, for a commission, from the "delivery point" which is a person preregistered in the application initially installed on his mobile phone.

When the money are delivered to the beneficiary, the application serves its purpose as a "proof of delivery" - POD - based on which the person in the "delivery point" gets the commission; the commission is bigger if the time of delivery is shorter.

It is also required that the post office and the crypto-currency exchange have accounts in the same bank.

The crypto-currency exchange can be an local external already existing one or could be optimized right through the application already installed on the mobile phone.

For a better understanding of the money transfer method for the persons who do not have bank accounts, through the mobile phone, let us say that the user wishes to send some money to his father who lives in another country:
- The user must log/ register in the application installed on his mobile phone, then the identity cards are by either scanned or manually tipped in the application, with a specification that the sender can also make the identification of the receiver if he knows the data;
- The application questions the user if he agrees with the exchange rate of the crypto-currency communicated by the crypto-currency exchange;
- If the answer is YES, the crypto-currency exchange exchanges the crypto-currency into a real coin and sends the money to a "delivery point" in the country of the receiver providing that the "delivery point" has an account in the same bank as the crypto-currency exchange;
- The sender of the money is informed through a message that the beneficiary has been contacted and if the identification data of the beneficiary do not correspond to those already registered in the application, the sender can block the delivery of the money or can correct the errors;
- The money arrive at the beneficiary delivered by the "delivery points" for a commission, provided that the persons in the "delivery points" are already registered in the application initially installed on the mobile phone of the sender.
- When the money are delivered to the beneficiary, the application serves its purpose as a "proof of delivery" - POD - based on which the person in the "delivery point" gets the commission; the commission is bigger if the time of delivery is shorter.
- In case the beneficiary cannot be found the money return on the crypto-currency exchange which converts it into a virtual coin and return them to the sender.

## Claims

1. Decentralized reversible money transfer method for the persons who do not have bank accounts, **wherein,** in a first stage an application is installed on the mobile phone of the sender, then an automatic registration of the user as sender is made in the crypto-currency exchange, then the identity cards of the sender and beneficiary are scanned, then the sender who has a virtual coin sends one virtual coin or a fraction of a virtual coin to the beneficiary, then the virtual coin is converted in a real coin using a protocol with the same crypto-currency exchange, meanwhile the money instantaneously arrive in the account of "delivery point" which has an account in the same bank as the crypto-currency exchange, then the "delivery point" verifies and updates the information regarding the beneficiary and the sender is informed through a message that the beneficiary has been contacted and if the identification data of the beneficiary do not correspond to those registered in the application, he can stop the transfer or correct the occurred errors after which the money are delivered by the "delivery point" selected by the application preinstalled on the mobile phone of the sender for a commission, in the same time the application serves its purpose as a "proof of delivery" - POD - based on which the person in the "delivery point" gets the commission and if the beneficiary cannot be found, the money return in the crypto-currency exchange which converts them into a virtual coin and returns them to the sender.
